(19) Europäisches Patentamt
European Patent Office
Office européen des brevets

(11) EP 4 273 191 A1

(12) EUROPEAN PATENT APPLICATION
published in accordance with Art. 153(4) EPC

(43) Date of publication:
**08.11.2023 Bulletin 2023/45**

(21) Application number: **21915731.0**

(22) Date of filing: **27.12.2021**

(51) International Patent Classification (IPC):
***C08K 5/00*** *(2006.01)* ***C08K 5/101*** *(2006.01)*
***C08K 5/12*** *(2006.01)* ***C08L 101/00*** *(2006.01)*

(52) Cooperative Patent Classification (CPC):
**C08K 5/00; C08K 5/101; C08K 5/12; C08L 101/00**

(86) International application number:
**PCT/KR2021/019970**

(87) International publication number:
**WO 2022/145933 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2020 KR 20200186411**
**07.12.2021 KR 20210174063**

(71) Applicant: **Hanwha Solutions Corporation**
**Jung-gu**
**Seoul 04541 (KR)**

(72) Inventors:
- **KWAK, Hee-La**
  **Daejeon 34128 (KR)**
- **KIM, Jaesong**
  **Daejeon 34128 (KR)**
- **RYOO, Sungmin**
  **Daejeon 34128 (KR)**
- **YOO, Myung-Ik**
  **Daejeon 34128 (KR)**

(74) Representative: **Berggren Oy**
**P.O. Box 16**
**Eteläinen Rautatiekatu 10A**
**00101 Helsinki (FI)**

# (54) PLASTICIZER COMPOSITION

(57) The present disclosure relates to an environmentally friendly plasticizer composition capable of reducing carbon emissions by including a recycled raw material, which has excellent gelling properties, plasticization efficiency, and weather resistance.



Processed by Luminess, 75001 PARIS (FR)

## Description

[TECHNICAL FIELD]

Cross-reference to Related Application(s)

This application claims the benefits of Korean Patent Applications No. 10-2020-0186411 filed on December 29, 2020 and No. 10-2021-0174063 filed on December 7, 2021 with the Korean Intellectual Property Office, the disclosure of which is incorporated herein by reference in its entirety.

The present disclosure relates to a plasticizer composition including a recycled raw material.

[BACKGROUND OF ART]

Recently, for environmental protection and resource recycling, research has been conducted to recover useful resources from waste synthetic resins or byproducts generated in the production of synthetic resins. In addition, research to reduce carbon emissions generated in the production of synthetic resin products is being actively conducted.

As a recycling technology of waste synthetic resins, in particular, a method of recycling waste polyesters is widely known. For example, a method of depolymerizing waste polyesters in the presence of a catalyst to recycle them into terephthalic acid, dimethyl terephthalate, and ethylene glycol as raw materials is known. The recycled terephthalic acid and dimethyl terephthalate may be recycled into dioctyl terephthalate, which is a useful material as a plasticizer, through esterification or transesterification. In addition, Chinese Patent Publication Nos. 104230714 and 104496819 disclose a method of recovering dioctyl terephthalate from wastewater in a polyester weight deduction process.

Dioctyl terephthalate is a widely used plasticizer, and dioctyl terephthalate recovered through the recycling process may also be used as a plasticizer for polymer resins. However, the recycled dioctyl terephthalate has disadvantages such as a yellow color and a foul smell compared to pure dioctyl terephthalate due to impurities mixed in during the recycling process. Accordingly, there is a problem in that the recycled dioctyl terephthalate can be used only in the manufacture of relatively low-quality products.

Therefore, with regard to the plasticizer composition containing a phthalate-based compound such as dioctyl terephthalate, it is required to develop a plasticizer composition capable of obtaining the effect of reducing carbon emissions in the resource recycling and manufacturing processes with excellent quality.

[PRIOR ART DOCUMENTS]

Chinese Patent Publication No. 104230714
Chinese Patent Publication No. 104496819

[DETAILED DESCRIPTION OF THE INVENTION]

[Technical Problem]

In the present disclosure, there is provided a plasticizer composition having excellent physical properties while including a recycled phthalate-based compound obtained from waste polyester or wastewater generated in the production of a polyester.

[Technical Solution]

According to one embodiment of the present disclosure, there is provided a plasticizer composition including a recycled phthalate-based compound as a first plasticizer; and a pure cyclohexane dicarboxylate-based compound and/or a recycled cyclohexane dicarboxylate-based compound as a second plasticizer,
wherein the first plasticizer is included in an amount of 95 parts by weight or less based on 100 parts by weight of the plasticizer composition.

Herein, 100 parts by weight of the plasticizer composition may include 20 to 85 parts by weight of the first plasticizer, and 5 to 70 parts by weight of the second plasticizer.

The first plasticizer may be at least one selected from the group consisting of recycled dibutyl phthalate, recycled dihexyl phthalate, recycled dioctyl phthalate, recycled di-n-octyl phthalate, recycled diisononyl phthalate, recycled diisodecyl phthalate, recycled dibutyl isophthalate, recycled dioctyl isophthalate, recycled diisononyl isophthalate, recycled

diisodecyl isophthalate, recycled dibutyl terephthalate, recycled dioctyl terephthalate, recycled diisononyl terephthalate, and recycled diisodecyl terephthalate.

The first plasticizer may have an acid value of 0.05 KOH mg/g to 0.25 KOH mg/g.

The cyclohexane dicarboxylate-based compound may be at least one selected from the group consisting of di(2-ethylhexyl)cyclohexane-1 ,4-dicarboxylate, diisononylcyclohexane-1,2-dicarboxylate, di(2-ethylhexyl)cyclohexane-1,2-dicarboxylate, butyl(2-ethylhexyl)cyclohexane-1,4-dicarboxylate, and dibutylcyclohexane-1,4-dicarboxylate.

For example, the first plasticizer may be recycled dioctylterephthalate, and the second plasticizer may be pure di(2-ethylhexyl)cyclohexane-1,4-dicarboxylate and/or recycled di(2-ethylhexyl)cyclohexane-1,4-dicarboxylate.

The plasticizer composition may further include at least one compound selected from the group consisting of phthalate-based compounds; polyol ester-based compounds; trimellitate-based compounds; aliphatic ester-based compounds; phosphate-based compounds; vegetable oils; epoxidized oils; and acylated monoglyceride compounds.

The plasticizer composition may have a carbon emission reduction rate of 5% or more.

The plasticizer composition may have an acid value of 0.25 KOH mg/g or less, and a yellow index (YI, yellowness) measured according to ASTM E313 of 120 or less.

According to another embodiment of the present disclosure, there is provided a resin composition including the plasticizer composition; and at least one resin selected from the group consisting of polyvinyl chloride, polystyrene, polyurethane, polyethylene, polypropylene, silicone, modified silicone, ethylene vinyl acetate resin, polyketone, polyvinyl butyral, acrylic resin, synthetic rubber resin, and thermoplastic elastomer.

The resin composition may include the plasticizer composition in an amount of 1 part by weight to 200 parts by weight based on 100 parts by weight of the resin.

The resin composition may have a yellow index (YI, yellowness) measured according to ASTM E313 of 10 to 25, and/or a yellow index (YI, yellowness) measured after 300 hours of UV aging according to ASTM G154 of 10 to 65.

According to another embodiment of the present disclosure, there is provided a molded product comprising the resin composition.

[ADVANTAGEOUS EFFECTS]

The plasticizer composition according to the present disclosure includes a recycled phthalate-based compound, but has less yellow color and less odor peculiar to recycled raw materials with excellent gelling properties, plasticization efficiency, and weather resistance, so that it can be used as a general-purpose plasticizer.

[DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the plasticizer composition, the resin composition including the same, and the molded product of the present invention will be described in more detail.

## Plasticizer composition

### First plasticizer

The plasticizer composition of the present disclosure includes a recycled phthalate-based compound as the first plasticizer.

In the present disclosure, the recycled phthalate-based compound refers to a phthalate-based compound that is not synthesized from pure raw materials, but is recovered from wastes through reprocessing.

Herein, the phthalate-based compound refers to a compound represented by the following Chemical Formula 1:

[Chemical Formula 1]

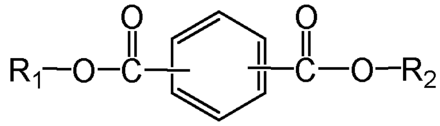

in Chemical Formula 1,

$R_1$ and $R_2$ are each independently a C4 to C12 linear or branched alkyl group.

Preferably, $R_1$ and $R_2$ may each independently be n-butyl, n-hexyl, n-octyl, 2-ethylhexyl, isononyl, or isodecyl.

The phthalate-based compound of Chemical Formula 1 may be represented by the following Chemical Formulae 1-1 to 1-3 depending on the position of the substituent.

[Chemical Formula 1-1]

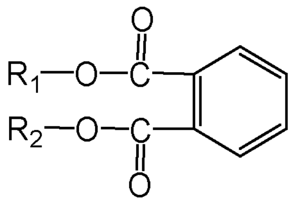

[Chemical Formula 1-2]

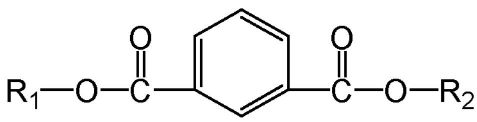

[Chemical Formula 1-3]

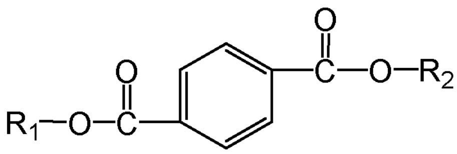

in Chemical Formulae 1-1 to 1-3, $R_1$ and $R_2$ are as defined in Chemical Formula 1.

The Chemical Formula 1-1 is a phthalate compound, the Chemical Formula 1-2 is an isophthalate compound, and the Chemical Formula 1-3 is a terephthalate compound.

Specific example of the phthalate compound represented by the Chemical Formula 1-1 may be dibutyl phthalate (DBP), dihexyl phthalate (DHP), dioctyl phthalate (DOP; or di(2-ethylhexyl)phthalate), di-n-octyl phthalate (DnOP), diisononyl phthalate, or diisodecyl phthalate (DIDP).

Specific example of the isophthalalate compound represented by the Chemical Formula 1-2 may be dibutyl isophthalalate (DBIP), dioctyl isophthalate (DOIP; or di(2-ethylhexyl)isophthalate), diisononyl isophthalate (DINIP), or diisodecyl isophthalate (DIDIP).

Specific example of the terephthalate compound represented by the Chemical Formula 1-3 may be dibutyl terephthalate (DBTP), dioctyl terephthalate (DOTP; or di(2-ethylhexyl)terephthalate), diisononyl terephthalate (DINTP), or diisodecyl terephthalate (DIDTP).

The recycled phthalate-based compound of the present disclosure may be any one or a mixture of the above-described phthalate compound, isophthalate compound, and terephthalate compound. In one embodiment, at least one selected from the group consisting of recycled dibutyl phthalate, recycled dihexyl phthalate, recycled dioctyl phthalate, recycled di-n-octyl phthalate, recycled diisononyl phthalate, recycled diisodecyl phthalate, recycled dibutyl isophthalate,

recycled dioctyl isophthalate, recycled diisononyl isophthalate, recycled diisodecyl isophthalate, recycled dibutyl terephthalate, recycled dioctyl terephthalate, recycled diisononyl terephthalate, and recycled diisodecyl terephthalate may be used as the recycled phthalate-based compound. Preferably, recycled dioctyl terephthalate may be used as the recycled phthalate-based compound.

The recycled phthalate-based compound used in the present disclosure may be a commercially available product, or may be obtained from wastes by using a known method.

For example, the recycled phthalate-based compound may be obtained by depolymerizing waste polyesters to obtain an aromatic dicarboxylic acid or an ester thereof, and reacting it with appropriate alcohol.

Alternatively, phthalic acid is extracted from wastewater discharged during caustic reduction processing of polyester fibers, wastewater generated in the production of pure terephthalate-based compounds, and wastes such as residues after filtration, and reacted with alcohol to obtain recycled phthalate-based compounds.

In the present disclosure, the recycled phthalate-based compound is included in an amount of 95 parts by weight or less based on 100 parts by weight of the total plasticizer composition.

Recycled phthalate-based compounds have a yellow color and a foul smell like oil due to impurities mixed in during the recycling process from wastes. In addition, the recycled phthalate-based compound often has a high acid value. Due to these problems, the recycled phthalate-based compound has a problem in that it is difficult to apply it in the manufacture of high-quality products in which color or smell is important.

Accordingly, the present disclosure controls the content of the recycled phthalate-based compound to 95 parts by weight or less based on 100 parts by weight of the plasticizer composition and uses a pure or recycled cyclohexane dicarboxylate-based compound as a second plasticizer together with the recycled phthalate-based compound, thereby solving color and odor problems derived from the recycled phthalate-based compound.

Preferably, the recycled phthalate-based compound may be included in an amount of 85 parts by weight or less, or 70 parts by weight or less, and 20 parts by weight or more, 30 parts by weight or more, 40 parts by weight or more, or 50 parts by weight or more based on 100 parts by weight of the plasticizer composition.

Meanwhile, the recycled phthalate-based compound has a higher acid value than that of a pure plasticizer. Specifically, the acid value of the recycled phthalate-based compound may be 0.05 KOH mg/g or more, 0.1 KOH mg/g or more, or 0.15 KOH mg/g or more, and 0.25 KOH mg/g or less, 0.2 KOH mg/g or less, or 0.18 KOH mg/g or less.

As such, the recycled phthalate-based compound has a higher acid value than that of conventional plasticizers, and has disadvantages such as a yellow color and an unpleasant odor. However, it is characterized in that thermal stability and gelling rate are improved by about 5% compared to pure phthalate-based compounds. Since the plasticizer composition of the present disclosure mainly uses a recycled phthalate-based compound instead of a pure phthalate-based compound, and also includes a pure or recycled cyclohexane dicarboxylate-based compound as a second plasticizer, the color and odor problems can be solved, and the gelling rate can be further improved.

However, when the acid value of the recycled phthalate-based compound is too high, exceeding 0.25 KOH mg/g, the color of the plasticizer composition may be too yellow or the odor may be severe, and the migration resistance of the plasticizer may be poor. Thus, it is desirable that the acid value is within the above range.

Herein, the acid value is a weight (mg) of potassium hydroxide (KOH) required to neutralize the acid contained in 1 g of a sample, and can be obtained by titrating the sample solution with an alcoholic KOH solution having a concentration of 0.1 N.

Second plasticizer

The plasticizer composition of the present disclosure includes a cyclohexane dicarboxylate-based compound as a second plasticizer. As the cyclohexane dicarboxylate-based compound, a pure cyclohexane dicarboxylate-based compound prepared from pure raw materials, a recycled cyclohexane dicarboxylate-based compound recovered from waste through reprocessing, or a combination thereof may be used.

The cyclohexane dicarboxylate-based compound can be used together with the recycled phthalate-based compound to improve plasticization efficiency and gelling rate of the plasticizer composition. In addition, since both the pure cyclohexane dicarboxylate-based compound and the recycled cyclohexane dicarboxylate-based compound have a lighter color and a better odor than the recycled phthalate-based compound, they may be used as the second plasticizer to supplement the color and odor of the first plasticizer.

The cyclohexane dicarboxylate-based compound is represented by the following Chemical Formula 2:

[Chemical Formula 2]

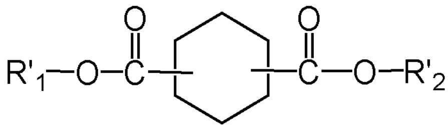

in Chemical Formula 2,

R'$_1$, and R'$_2$ are each independently a C4 to C12 linear or branched chain alkyl group.

Preferably, R'$_1$, and R'$_2$ are each independently a butyl group, an isobutyl group, a pentyl group, a hexyl group, a heptyl group, a 2-ethylhexyl group, an octyl group, a nonyl group, an isononyl group, a 2-propylheptyl group, a decyl group, or an isodecyl group. Preferably, R'$_1$, and R'$_2$ are each independently a butyl group, a 2-ethylhexyl group, or an isononyl group.

The cyclohexane dicarboxylate-based compound of Chemical Formula 2 may be represented by the following Chemical Formula 2-1 to 2-3 depending on the position of the substituent.

[Chemical Formula 2-1]

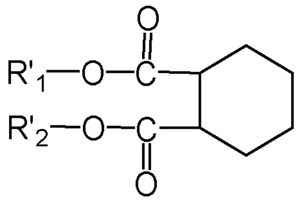

[Chemical Formula 2-2]

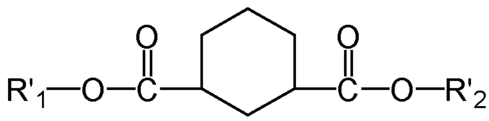

[Chemical Formula 2-3]

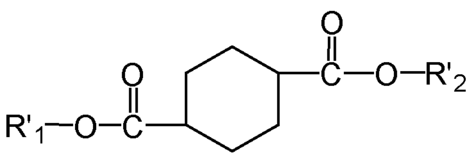

in Chemical Formulae 2-1 to 2-3, R'$_1$, and R'$_2$ are as defined in Chemical Formula 2.

The Chemical Formula 2-1 is a cyclohexane-1,2-dicarboxylate-based compound, the Chemical Formula 2-2 is a cyclohexane-1,3-dicarboxylate-based compound, and the Chemical Formula 2-3 is a cyclohexane-1,4-dicarboxylate-based compound.

In one embodiment, the cyclohexane dicarboxylate-based compound may be at least one selected from the group consisting of di(2-ethylhexyl)cyclohexane-1,4-dicarboxylate, diisononylcyclohexane-1,2-dicarboxylate, di(2-ethylhexyl)cyclohexane-1,2-dicarboxylate, butyl(2-ethylhexyl)cyclohexane-1,4-dicarboxylate, and dibutylcyclohexane-1,4-dicarboxylate.

Preferably, the cyclohexane dicarboxylate-based compound may be di(2-ethylhexyl) cyclohexane-1,4-dicarboxylate (DEHCH) represented by the following Chemical Formula 2-4:

[Chemical Formula 2-4]

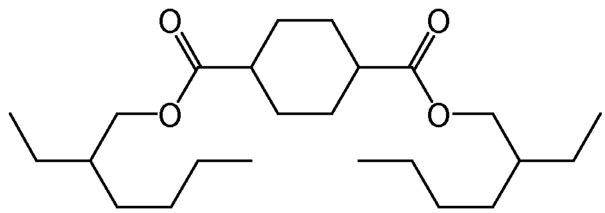

The DEHCH is transparent, has no odor, has low viscosity at room temperature and low temperatures to realize excellent work performance, has a fast gelling rate, and has excellent plasticization efficiency and plasticizer migration resistance compared to other cyclohexane dicarboxylate-based compounds. Accordingly, when DEHCH is used, physical properties of the plasticizer composition can be further improved.

The pure cyclohexane dicarboxylate-based compound may be a commercially available product, or may be obtained from pure materials by using a known method.

When a pure cyclohexane dicarboxylate-based compound is used as the second plasticizer, color and odor problems of the recycled phthalate-based compound, which is the first plasticizer, can be more effectively supplemented. Therefore, a plasticizer composition using a pure cyclohexane dicarboxylate-based compound as the second plasticizer may be more suitably used for manufacturing high-quality products.

The recycled cyclohexane dicarboxylate-based compound may be a commercially available product, or may be obtained from wastes by using a known method. For example, after obtaining a recycled phthalate-based compound as the first plasticizer by the above-described method, a recycled cyclohexane dicarboxylate-based compound may be obtained by hydrogenating the same. In this process, the energy consumed in the production of pure phthalate-based compounds and the amount of greenhouse gases emitted are reduced. Accordingly, when the recycled cyclohexane dicarboxylate-based compound is used as the second plasticizer, carbon emissions of the plasticizer composition can be significantly reduced. In addition, since some impurities are removed in the hydrogenation reaction and subsequent purification process, the recycled cyclohexane dicarboxylate-based compound exhibits superior color and less odor compared to the recycled phthalate-based compound, thereby complementing the characteristics of the first plasticizer.

The recycled cyclohexane dicarboxylate-based compound exhibits the same characteristics as the pure cyclohexane dicarboxylate-based compound with a fast gelling rate and a high plasticization efficiency. However, it has a relatively yellow color and has a higher acid value compared to the pure cyclohexane dicarboxylate-based compound due to impurities.

Specifically, the acid value of the recycled cyclohexane dicarboxylate-based compound may be more than 0.05 KOH mg/g and 0.3 KOH mg/g or less. The pure cyclohexane dicarboxylate-based compound has an acid value of 0.1 KOH mg/g or less, or 0.05 KOH mg/g or less. As the lower acid value can be evaluated as the better, the lower limit may be theoretically 0 KOH mg/g.

The acid value is a weight (mg) of potassium hydroxide (KOH) required to neutralize the acid contained in 1 g of a sample, and can be obtained by titrating the sample solution with an alcoholic KOH solution having a concentration of 0.1 N.

The second plasticizer may preferably be included in an amount of 5 parts by weight or more, 10 parts by weight or more, 15 parts by weight or more, or 30 parts by weight or more, and 70 parts by weight or less, 60 parts by weight or less, or 50 parts by weight or less.

When the content of the second plasticizer is less than 5 parts by weight based on 100 parts by weight of the plasticizer composition, it may be insufficient to supplement the physical properties of the recycled phthalate-based compound. In addition, when the content of the second plasticizer exceeds 70 parts by weight based on 100 parts by weight of the plasticizer composition, it is impossible to ensure physical properties as a plasticizer containing the phthalate-based compound due to a relatively low content of the recycled phthalate-based compound, and it is difficult to expect an effect of reducing carbon emissions by the use of the recycled phthalate-based compound.

In one embodiment of the present disclosure, the first plasticizer may be recycled dioctyl terephthalate, and the second plasticizer may be di(2-ethylhexyl)cyclohexane-1,4-dicarboxylate. At this time, di(2-ethylhexyl) cyclohexane-1,4-dicarboxylate may be pure di(2-ethylhexyl)cyclohexane-1,4-dicarboxylate, recycled di(2-ethylhexyl)cyclohexane-1,4-dicarboxylate, or a combination thereof.

Meanwhile, the plasticizer composition of the present disclosure may not include other plasticizers other than the above-described first, and second plasticizers. Specifically, the plasticizer composition may include 20 to 85 parts by weight of the first plasticizer and 5 to 70 parts by weight of the second plasticizer. Alternatively, the plasticizer composition may include 50 to 70 parts by weight of the first plasticizer and 30 to 50 parts by weight of the second plasticizer.

Preferably, the plasticizer composition may include 20 to 85 parts by weight of recycled dioctyl terephthalate as the first plasticizer and 5 to 70 parts by weight of di(2-ethylhexyl)cyclohexane-1,4-dicarboxylate as the second plasticizer. More preferably, the plasticizer composition may include 50 to 70 parts by weight of recycled dioctyl terephthalate as the first plasticizer and 30 to 50 parts by weight of di(2-ethylhexyl)cyclohexane-1,4-dicarboxylate as the second plasticizer. At this time, di(2-ethylhexyl)cyclohexane-1,4-dicarboxylate may be pure di(2-ethylhexyl)cyclohexane-1,4-dicarboxylate, recycled di(2-ethylhexyl)cyclohexane-1,4-dicarboxylate, or a combination thereof.

Additional plasticizer

The plasticizer composition of the present disclosure may further include an additional plasticizer in addition to the first, and second plasticizers.

As the additional plasticizer, a material usually used as a plasticizer of a polymer resin may be used without limitation. For example, at least one selected from the group consisting of phthalate-based compounds; polyol ester-based compounds; trimellitate-based compounds; aliphatic ester-based compounds; phosphate-based compounds; vegetable oils; epoxidized oils; and acylated monoglyceride compounds may be used.

The phthalate-based compound is a compound represented by the Chemical Formula 1. Specifically, it may be at least one selected from the group consisting of dibutyl phthalate, dinormalhexyl phthalate, diisoheptyl phthalate, diheptyl phthalate, di(2-ethylhexyl)phthalate, diheptylnonylphthalate, dinormaloctyldecylphthalate, diheptylnonylundecylphthalate, diisononylphthalate, dinonylphthalate, dinormalnonylphthalate, diisodecylphthalate, dinormalnonyldecylundecylphthalate, dinonylundecylphthalate, diundecylphthalate, diisoundecyldodecylphthalate, ditridecylphthalate, dibutylterephthalate, butyloctylterephthalate, di(2-ethylhexyl)terephthalate, and butylbenzyl phthalate.

The polyol ester-based compound is a compound obtained by esterification of a polyol and a carboxylic acid.

The polyol is a polyol having 3 to 8 carbon atoms, for example, propane-1,3-diol, propylene glycol, glycerol, trimethylolethane, trimethylolpropane, sorbitan, sorbitol, isosorbide, erythritol, threitol, pentaerythritol, arabitol, xylitol, ribitol, fucitol, mannitol, galactitol, iditol, inositol, volemitol, or glucose may be used.

Examples of the carboxylic acid include butyric acid, caproic acid, caprylic acid, capric acid, lauric acid, myristic acid, palmitic acid, stearic acid, arachidic acid, behenic acid, lignoceric acid, palmitoleic acid, oleic acid, and valeric acid, but the present disclosure is not limited thereto.

Specifically, pentaerythritol tetravalerate (Pevalen™) may be used as the polyol ester-based compound.

Specific example of the trimellitate-based compound may be at least one selected from the group consisting of tri-(2-ethylhexyl) trimellitate, trimethyl trimellitate, trihexyl trimellitate, triheptyl trimellitate, tri-(n-octyl, n-decyl) trimellitate, and tri-(heptyl, nonyl) trimellitate.

The aliphatic ester-based compound may be an ester compound derived from an aliphatic carboxylic acid compound such as adipic acid, sebacic acid, azelaic acid, and maleic acid. Specific example of the aliphatic ester compound may be at least one selected from the group consisting of dimethyl adipate, monomethyl adipate, dioctyl adipate, diheptylnonyl adipate, di(2-ethylhexyl) adipate, diisononyl adipate, diisodecyl adipate, di(2-ethylhexyl)sebacate, dibutyl sebacate, di(2-ethylhexyl)azelate, dibutyl maleate, and diisobutyl maleate.

The phosphate-based compound may be at least one selected from the group consisting of triethyl phosphate, tricresyl phosphate, tri-2-ethylhexyl phosphate, tritolyl phosphate, and trixylyl phosphate.

The vegetable oil may be at least one selected from the group consisting of soybean oil, castor oil, linseed oil, palm oil, canola oil, and flax oil.

The epoxidized oil is epoxidized fatty acid alkyl esters prepared by epoxidizing fatty acid alkyl esters. For example, specific example of the epoxidized vegetable oil may be at least one selected from the group consisting of epoxidized soybean oil, epoxidized castor oil, epoxidized linseed oil, epoxidized palm oil, epoxidized stearate, epoxidized oleate, epoxidized tall oil, and epoxidized linoleate.

The acylated monoglyceride compound may be prepared by performing an acylation reaction on monoglyceride prepared by reacting glycerol with a fatty acid, and in this case, the above-described aliphatic carboxylic acid, vegetable oil, etc. may be used as the fatty acid.

The additional plasticizer may be used alone or in combination of two or more.

When the additional plasticizer is included, the content of the additional plasticizer may be 1 part by weight or more, or 5 parts by weight or more, and 30 parts by weight or less, 20 parts by weight or less, or 10 parts by weight or less based on 100 parts by weight of the plasticizer composition. When the content of the additional plasticizer is too high, the content of the first and second plasticizers is relatively reduced. Therefore, the above-described effect of reducing carbon emissions and the effect of improving thermal stability and gelling rate cannot be sufficiently obtained, and thus it is preferable to satisfy the above range.

The plasticizer composition of the present disclosure can reduce carbon emissions by using a recycled phthalate-based compound. Further, it includes a cyclohexane dicarboxylate-based compound together with the recycled phthalate-based compound, thereby having excellent color, less odor, and a relatively low acid value even when the recycled raw material is used.

Specifically, the plasticizer composition may have an acid value of 0.25 KOH mg/g or less, 0.22 KOH mg/g or

less, or 0.2 KOH mg/g or less. There is no specific lower limit, because the lower acid value can be evaluated as the better. In theory, the lower limit may be 0 KOH mg/g. In particular, the high acid value of the plasticizer composition means that there are many impurities in addition to the plasticizer. When there are many impurities, the color of the plasticizer may change from colorless and transparent to yellow or brown, or the odor may be severe. Alternatively, migration resistance of the final product using the plasticizer having a high acid value may deteriorate. Thus, it is preferable that the plasticizer composition maintains the acid value within the above range.

In addition, the plasticizer composition may have a yellow index of 120 or less, 100 or less, or 92 or less, when measured according to ASTM D1209 and E313.

In addition, the plasticizer composition may have a carbon emission reduction rate of 5% or more, or 5% or more and 40% or less. The carbon emission reduction rate of the plasticizer composition is a value calculated in comparison with a plasticizer composition containing a pure phthalate-based compound and/or a pure cyclohexane dicarboxylate-based compound instead of the recycled phthalate-based compound and/or the recycled cyclohexane dicarboxylate-based compound, and corresponds to the carbon emission reduction rate with the use of recycled materials instead of pure raw materials.

Specifically, the carbon emission reduction rate (%) of the plasticizer composition can be calculated as in Equation 1 below.

[Equation 1]

$$\text{Carbon emission reduction rate (\%)} = 100-[(A1/A2)\times 100]$$

In Equation 1,

A1 represents carbon emissions ($tCO_2$ eq/MT) of a plasticizer composition, and
A2 represents carbon emissions ($tCO_2$ eq/MT) of a control plasticizer composition.

Specifically, A1 in Equation corresponds to total carbon emissions ($tCO_2$ eq/MT) according to the composition ratio of each component contained in the plasticizer composition to be measured. A2 corresponds to total carbon emissions ($tCO_2$ eq/MT) according to the composition ratio of each component of a control plasticizer composition using the same composition as the plasticizer composition measured in A1, but containing pure materials (pure phthalate-based compound and/or pure cyclohexane dicarboxylate-based compound) instead of the recycled materials (recycled phthalate-based compound and/or recycled cyclohexane dicarboxylate-based compound). Herein, the unit of the carbon emissions is a weight equivalent (eq) of total $CO_2$ emissions per metric ton.

For example, the carbon emissions (A1) of the plasticizer composition containing R-DOTP and DEHCH at 50:50 is 0.568 $tCO_2$ eq/MT calculated as the sum of carbon emissions of each component according to this composition ratio, that is, carbon emissions of R-DOTP $\times$ 0.5 + carbon emissions of DEHCH $\times$ 0.5. The control plasticizer composition with respect to the above plasticizer composition is a plasticizer composition containing DOTP and DEHCH at 50:50, and the carbon emissions (A2) thereof is 0.611 $tCO_2$ eq/MT calculated as carbon emissions of DOTP $\times$ 0.5 + carbon emissions of DEHCH $\times$ 0.5. Therefore, according to Equation 1, the carbon emission reduction rate of the plasticizer composition containing R-DOTP and DEHCH at 50:50 is 7.04%. In the above, the carbon emissions of each component used in the plasticizer composition was calculated as the following value:

- Recycled dioctyl terephthalate (R-DOTP): 0.485 $tCO_2$ eq/MT
- Pure dioctyl terephthalate (DOTP, or Pure-DOTP): 0.571 $tCO_2$ eq/MT
- Pure di(2-ethylhexyl)cyclohexane-1,4-dicarboxylate (DEHCH, or Pure-DEHCH): 0.651 $tCO_2$ eq/MT

The carbon emissions of each component used in the plasticizer composition may refer to the value provided by the manufacturer or may be calculated based on the manufacturing process and chemical reaction of each component. A method of calculating the carbon emission reduction rate may be specified in Experimental Example to be described later.

Preferably, the carbon emission reduction rate of the plasticizer composition may be 5% or more, 5.5% or more, 6% or more, 6.5% or more, or 7% or more, and 40% or less, 30% or less, or 20% or less.

Meanwhile, the plasticizer composition is excellent in physical properties such as gelling properties, plasticization efficiency and weather resistance when used with a resin. Therefore, the plasticizer composition of the present disclosure can be applied to various polymer resins as a plasticizer.

## Resin composition

Accordingly, according to another embodiment of the present disclosure, there is provided a resin composition including the plasticizer composition; and at least one resin selected from the group consisting of polyvinyl chloride, polystyrene, polyurethane, polyethylene, polypropylene, silicone, modified silicone, ethylene vinyl acetate resin, polyketone, polyvinyl butyral, acrylic resin, synthetic rubber resin, and thermoplastic elastomer.

The contents of the resin and the plasticizer in the resin composition are not limited, and may be appropriately adjusted depending on the resin used and the desired physical properties. For example, the resin composition may include 1 to 200 parts by weight, 30 to 200 parts by weight, or 50 to 150 parts by weight of the above-described plasticizer composition based on 100 parts by weight of the resin.

The resin composition may further include at least one additive selected from the group consisting of stabilizers, fillers and pigments. The additive may be appropriately selected depending on physical properties to be improved in the resin composition.

The stabilizer is added for the purpose of preventing changes in the physical properties of the resin, and includes at least one selected from the group consisting of Ca-Zn-based compounds, K-Zn-based compounds, Ba-Zn-based compounds, organic Tin-based compounds; metallic soap-based compounds, phenol-based compounds, phosphoric acid ester-based compounds and phosphorous acid ester-based compounds.

More specific examples of the stabilizers which may be used in the present disclosure may include Ca-Zn-based compounds; K-Zn-based compounds; Ba-Zn-based compounds; organic Tin-based compounds such as mercaptide-based compounds, maleic acid-based compounds or carboxylic acid-based compounds; metallic soap-based compounds such as Mg-stearate, Ca-stearate, Pb-stearate, Cd-stearate, or Ba-stearate; phenol-based compounds; phosphoric acid ester-based compounds; phosphorous acid ester-based compounds, etc., but the present disclosure is not limited thereto.

The filler is used for the purpose of improving productivity, dry touch feeling, and flame retardant properties of the resin composition, and includes at least one selected from the group consisting of calcium carbonate, talc, titanium dioxide, kaolin, silica, alumina, magnesium hydroxide, aluminum hydroxide, phosphorus-based compounds, melamine-based compounds, phosphorus-melamine complex compounds, boron-based flame retardants, carbon black, carbon nanotube, nano-clay, and clay.

The pigment may be titanium dioxide, carbon black, cadmium-based pigment, or the like.

The resin composition according to the present disclosure may be prepared according to a method commonly known in the art by using the resin, the plasticizer composition, and optionally, the additive. The method is not particularly limited.

In one embodiment, the resin composition may be a vinyl chloride resin composition including a vinyl chloride resin. The vinyl chloride resin composition includes the plasticizer composition according to the present disclosure, thereby exhibiting excellent color, gelling properties and weather resistance.

The vinyl chloride resin may be a homopolymer in which a vinyl chloride monomer is homopolymerized, or a copolymer in which a vinyl chloride monomer and a comonomer copolymerizable therewith are polymerized. Any one or a mixture thereof may be used in the preparation of the vinyl chloride resin composition.

The comonomer copolymerizable with the vinyl chloride monomer may be, specifically, vinyl esters such as vinyl acetate, vinyl propionate, or vinyl stearate; vinyl ethers having an alkyl group such as methyl vinyl ether, ethyl vinyl ether, octyl vinyl ether, or launyl vinyl ether; vinylidene halides such as vinylidene chloride; unsaturated carboxylic acids such as acrylic acid, methacrylic acid, fumaric acid, maleic acid, itaconic acid, maleic anhydride, or itaconic anhydride, and acid anhydrides thereof; unsaturated carboxylic acid esters such as methyl acrylate, ethyl acrylate, monomethyl maleate, dimethyl maleate, or butylbenzyl maleate; aromatic vinyl compounds such as styrene, $\alpha$-methyl styrene, or divinyl benzene; unsaturated nitriles such as acrylonitrile or methacrylonitrile; olefins such as ethylene or propylene; or cross-linkable monomers such as diallyl phthalate. Any one or a mixture of two or more thereof may be used. Among them, the comonomer may more preferably include vinyl acetate, etc. in terms of excellent compatibility with the vinyl chloride monomer and improving compatibility with the plasticizer constituting the resin composition after polymerization.

As described above, the vinyl chloride resin may be prepared by polymerization of a vinyl chloride monomer alone, or by polymerization of a vinyl chloride monomer and a comonomer copolymerizable therewith. At this time, the polymerization method is not particularly limited, and the polymerization may be performed according to a conventional polymerization method known in the art such as suspension polymerization, bulk polymerization, emulsion polymerization, or seed emulsion polymerization.

The average particle size and uniformity of the vinyl chloride resin can be controlled by adjusting the polymerization conditions. Specifically, the straight vinyl chloride resin prepared by suspension polymerization or bulk polymerization may have an average particle size ($D_{50}$) of 50 to 400 $\mu$m, and the paste vinyl chloride resin prepared by emulsion polymerization or fine suspension polymerization may have an average particle size ($D_{50}$) of less than 100 $\mu$m, preferably 0.1 to 40 $\mu$m. The average particle size ($D_{50}$) of the vinyl chloride resin may be measured according to a conventional

particle size distribution measuring method such as optical microscopy or light scattering measurement.

A bulk density of the vinyl chloride resin measured according to ASTM D 1895 may be in the range of 0.30 to 0.70 $g/cm^3$, or 0.40 to 0.60 $g/cm^3$. When bulk density is within the above range, the plasticization effect and mechanical properties may be more excellent.

The degree of polymerization and the weight average molecular weight of the vinyl chloride resin may affect compatibility with the components constituting the vinyl chloride resin composition, particularly a plasticizer, and processability of the vinyl chloride resin composition, and may be appropriately adjusted by controlling polymerization conditions during polymerization.

Specifically, the vinyl chloride resin may have the degree of polymerization of 500 to 3,000, or the weight average molecular weight (Mw) of 25,000 g/mol to 300,000 g/mol. When the degree of polymerization and the weight average molecular weight are within the above ranges, dispersibility is excellent, compatibility with the plasticizer is good, and processability of the vinyl chloride resin composition can be improved.

If the degree of polymerization of the vinyl chloride resin is less than 500 or the weight average molecular weight is less than 25,000 g/mol, there is a fear that processability and durability of the product after processing may be deteriorated due to insufficient physical properties. When the degree of polymerization is more than 3,000 or the weight average molecular weight is more than 300,000 g/mol, the molecular weight is too high, thereby making it difficult to mold or process. More specifically, the vinyl chloride resin may have the degree of polymerization of 700 or more and less than 1,700 or the weight average molecular weight (Mw) of 45,000 g/mol to 250,000 g/mol.

The weight average molecular weight (Mw) of the vinyl chloride resin is a converted value using standard polystyrene by gel permeation chromatography. In addition, the degree of polymerization of the vinyl chloride resin can be measured according to JIS K 6720-2.

In one embodiment, the vinyl chloride resin may be a straight vinyl chloride resin.

In addition, in one embodiment, PVC scrap may be used as the vinyl chloride resin. PVC scrap is manufactured in powder form by processing waste PVC products such as flooring materials, tarpaulins, and calendar, etc., and can further reduce carbon emissions compared to the case of using pure PVC. The PVC scrap may be a commercially available product or may be obtained from waste PVC through pulverization. In this case, the PVC scraps without heavy metals and toxic substances are suitable for producing eco-friendly products, and specifically, PVC scraps obtained by pulverizing waste chassis or decorative tiles may be preferably used. For example, the PVC scrap may contain four major heavy metals (Pb, Cd, Hg, hexavalent Cr) in an amount of 90 mg/kg or less, 50 mg/kg or less, or 25 mg/kg or less, preferably 0 mg/kg.

The resin composition may have a yellow index (YI, yellowness) measured according to ASTM E313 of 10 to 25; or 22 or less, or 20 or less and 15 or more, or 18 or more.

In addition, the resin composition may have a yellow index (YI, yellowness) measured after 300 hours of UV aging according to ASTM G154 of 10 to 65; preferably 64 or less, 63 or less, or 62.5 or less, and 20 or more, 30 or more, or 40 or more.

In addition, the resin composition may have a carbon emission reduction rate of 1.5% or more, or 1.5% or more and 60% or less. The carbon emission reduction rate of the resin composition is a value calculated in comparison with a vinyl chloride resin composition using a plasticizer composition containing a pure phthalate-based compound and/or a pure cyclohexane dicarboxylate-based compound instead of the recycled phthalate-based compound and/or the recycled cyclohexane dicarboxylate-based compound, and corresponds to the carbon emission reduction rate with the use of recycled materials instead of pure materials.

Specifically, the carbon emission reduction rate (%) of the resin composition can be calculated as in Equation 2 below.

[Equation 2]

$$\text{Carbon emission reduction rate (\%)} = 100-[(A3/A4)\times 100]$$

In Equation 2,

A3 represents carbon emissions ($tCO_2$ eq/MT) of a resin composition, and
A4 represents carbon emissions ($tCO_2$ eq/MT) of a control resin composition.

Specifically, A3 in Equation 2 corresponds to total carbon emissions ($tCO_2$ eq/MT) according to the composition ratio of each component contained in the resin composition to be measured. A4 corresponds to total carbon emissions ($tCO_2$ eq/MT) according to the composition ratio of each component of the resin composition using the same composition

as the resin composition measured in A3, but containing pure materials (pure phthalate-based compound and/or pure cyclohexane dicarboxylate-based compound) instead of the recycled materials (recycled phthalate-based compound and/or recycled cyclohexane dicarboxylate-based compound). Herein, the unit of the carbon emissions is a weight equivalent (eq) of total $CO_2$ emissions per metric ton.

For example, when the resin composition is a vinyl chloride resin composition containing 100 parts by weight of polyvinyl chloride (PVC, Hanwha Solutions P-1000), 30 parts by weight of a plasticizer including R-DOTP and DEHCH at 50:50, and 2 parts by weight of a heat stabilizer, the weight ratios of PVC, R-DOTP, DEHCH and the Bn/Zn-based heat stabilizer contained in the vinyl chloride resin composition are 0.758, 0.114, 0.114, and 0.015, respectively. Considering only the carbon emissions of PVC, R-DOTP, and DEHCH, excluding the carbon emissions of the heat stabilizer having an insignificant content in the composition, the carbon emissions (A3) of the resin composition is calculated as the sum of carbon emissions of each component according to the composition ratio with the weight ratio of PVC, R-DOTP, and DEHCH of 0.758, 0.114, and 0.114 and is 0.267 $tCO_2$ eq/MT (that is, carbon emissions of PVC × 0.758 + carbon emissions of R-DOTP × 0.114 + carbon emissions of DEHCH × 0.114). The control resin composition with respect to the above vinyl chloride resin composition is a resin composition containing PVC, DOTP, and DEHCH at a weight ratio of 0.758, 0.114, and 0.114, and the carbon emissions (A4) thereof is 0.277 $tCO_2$ eq/MT calculated as carbon emissions of PVC × 0.758 + carbon emissions of DOTP × 0.114 + carbon emissions of DEHCH × 0.114. Therefore, according to Equation 2, the carbon emission reduction rate of the vinyl chloride resin composition is 3.53%. In the above, the carbon emissions of each component used in the plasticizer composition was calculated as the following value:

- Polyvinyl chloride (PVC, Hanwha Solution P-1000): 0.182 $tCO_2$ eq/MT
- Recycled dioctyl terephthalate (R-DOTP): 0.485 $tCO_2$ eq/MT
- Pure dioctyl terephthalate (DOTP, or Pure-DOTP): 0.571 $tCO_2$ eq/MT
- Pure di(2-ethylhexyl)cyclohexane-1,4-dicarboxylate (DEHCH, or Pure-DEHCH): 0.651 $tCO_2$ eq/MT

The carbon emissions of each component used in the plasticizer composition may refer to the value provided by the manufacturer or may be calculated based on the manufacturing process and chemical reaction of each component. A method of calculating the carbon emission reduction rate may be specified in Experimental Example to be described later.

The carbon emission reduction rate may vary depending on the composition of the plasticizer composition and the type of resin used. For example, the carbon emission reduction rate of the resin composition may be 1.8% or more, 2% or more, 3% or more, 3.5% or more, 4.2% or more, or 5% or more. If a resin produced from pure raw materials is used, the carbon emission reduction rate of the resin composition is 28% or less, 25% or less, 22% or less, 20% or less, 18% or less, 16% or less, or 11 % or less. If a recycled resin such as PVC scrap is used, the carbon emission reduction rate may be 60% or less, or 55% or less.

In addition, the resin composition has excellent color and odor characteristics as described above, and also has excellent thermal stability and a fast gelling rate.

According to another aspect of the present disclosure, there is provided a molded product including the above resin composition.

The molded product may be used in the manufacture of a food packaging film (e.g., wrap), industrial film, compound, decor sheet, decor tile, soft sheet, hard sheet, wire and cable, wallpaper, foam mat, artificial leather, flooring, tarpaulin, gloves, sealant, gasket of refrigerator, hoses, medical device, geogrids, mesh tarpaulin, toy product, stationery, insulating tape, clothing coatings, label used for clothing or stationery, bottle cap liner, stopper for industrial or other purposes, artificial bait, electronic component (e.g., sleeve), automobile interior material, adhesive, sealant, coatings, and the like, but the present disclosure is not limited thereto.

Hereinafter, the present invention will be described in more detail with the following examples. However, the following examples are only for illustrating the present invention, and the scope of the present invention is not limited thereto.

**[Examples]**

**Example 1**

A plasticizer composition was prepared by mixing recycled dioctyl terephthalate (R-DOTP, acid value of 0.175 KOH mg/g) manufactured by Runzenengyuan of China and di(2-ethylhexyl)cyclohexane-1,4-dicarboxylate (DEHCH) at a weight ratio of 50:50.

30 parts by weight of the plasticizer composition and 2 parts by weight of a Ba/Zn-based heat stabilizer were added based on 100 parts by weight of polyvinyl chloride (Hanwha Solution P-1000F, degree of polymerization of 1000±50, bulk density of 0.55±0.04 g/$cm^3$), and then kneaded with a roll mill to prepare a vinyl chloride resin composition.

**Example 2**

A plasticizer composition was prepared by mixing recycled dioctyl terephthalate (R-DOTP) manufactured by Runzenengyuan of China and di(2-ethylhexyl)cyclohexane-1,4-dicarboxylate (DEHCH) at a weight ratio of 60:50.

30 parts by weight of the plasticizer composition and 2 parts by weight of a Ba/Zn-based heat stabilizer were added based on 100 parts by weight of polyvinyl chloride (Hanwha Solution P-1000F), and then kneaded with a roll mill to prepare a vinyl chloride resin composition.

**Example 3**

A plasticizer composition was prepared by mixing recycled dioctyl terephthalate (R-DOTP) manufactured by Runzenengyuan of China and di(2-ethylhexyl)cyclohexane-1 ,4-dicarboxylate (DEHCH) at a weight ratio of 70:30.

30 parts by weight of the plasticizer composition and 2 parts by weight of a Ba/Zn-based heat stabilizer were added based on 100 parts by weight of polyvinyl chloride (Hanwha Solution P-1000F), and then kneaded with a roll mill to prepare a vinyl chloride resin composition.

**Example 4**

A plasticizer composition was prepared by mixing recycled dioctyl terephthalate (R-DOTP, acid value of 0.175 KOH mg/g) manufactured by Runzenengyuan of China and recycled di(2-ethylhexyl)cyclohexane-1,4-dicarboxylate (R-DEHCH acid value of 0.250 KOH mg/g) prepared by hydrogenating R-DOTP at a weight ratio of 50:50.

60 parts by weight of the plasticizer composition and 3 parts by weight of a Ba/Zn-based heat stabilizer were added based on 100 parts by weight of polyvinyl chloride (Hanwha Solution P-1000F, degree of polymerization of $1000\pm50$, bulk density of $0.55\pm0.04$ g/cm$^3$), and then kneaded with a roll mill to prepare a vinyl chloride resin composition.

**Example 5**

60 parts by weight of the plasticizer composition of Example 4 and 3 parts by weight of a Ba/Zn-based heat stabilizer were added based on 100 parts by weight of recycled polyvinyl chloride (PVC scrap: waste PVC products such as flooring materials, tarpaulin, and calendar are processed into powder through pulverization), and then kneaded with a roll mill to prepare a vinyl chloride resin composition.

**Example 6**

A plasticizer composition was prepared in the same manner as in Example 4, except that the weight ratio of R-DOTP and R-DEHCH was 70:30. Thereafter, a vinyl chloride resin composition was prepared in the same manner as in Example 4 using the plasticizer composition.

**Comparative Example 1**

A plasticizer composition was prepared in the same manner as in Example 1 using recycled dioctyl terephthalate (R-DOTP) manufactured by Runzenengyuan of China as a plasticizer.

**Comparative Example 2**

A plasticizer composition was prepared by mixing recycled dioctyl terephthalate (R-DOTP) manufactured by Runzenengyuan of China and di(2-ethylhexyl)cyclohexane-1,4-dicarboxylate (DEHCH) at a weight ratio of 95:5.

Then, a vinyl chloride resin composition was prepared in the same manner as in Example 1 using the plasticizer composition.

**Comparative Example 3**

A plasticizer composition and a vinyl chloride resin composition were prepared in the same manner as in Example 1, except that pure dioctyl terephthalate (DOTP, Hanwha Solutions SP-390) was used instead of recycled dioctyl terephthalate.

**[Experimental Examples]**

Each of the plasticizer compositions and the vinyl chloride resin compositions of Examples and Comparative Examples was evaluated by the following method, and the results are shown in Table 1.

(1) Carbon emission reduction rate (%)

Carbon emission reduction rates (%) with respect to the plasticizer compositions of Examples and Comparative Examples were calculated according to Equation 1 below.

[Equation 1]

$$\text{Carbon emission reduction rate (\%)} = 100-[(A1/A2)\times 100]$$

In Equation 1,

A1 represents carbon emissions ($tCO_2$ eq/MT) of a plasticizer composition, and
A2 represents carbon emissions ($tCO_2$ eq/MT) of a control plasticizer composition.

Specifically, A1 in Equation corresponds to total carbon emissions ($tCO_2$ eq/MT) according to the composition ratio of each component contained in the plasticizer composition to be measured. A2 corresponds to total carbon emissions ($tCO_2$ eq/MT) according to the composition ratio of each component of a control plasticizer composition using the same composition as the plasticizer composition measured in A1, but containing pure materials (pure phthalate-based compound and/or pure cyclohexane dicarboxylate-based compound) instead of the recycled materials (recycled phthalate-based compound and/or recycled cyclohexane dicarboxylate-based compound). Herein, the unit of the carbon emissions is a weight equivalent (eq) of total $CO_2$ emissions per metric ton.

In addition, the carbon emission reduction rate (%) of the vinyl chloride resin compositions of Examples and Comparative Examples was calculated as in Equation 2 below.

[Equation 2]

$$\text{Carbon emission reduction rate (\%)} = 100-[(A3/A4)\times 100]$$

In Equation 2,

A3 represents carbon emissions ($tCO_2$ eq/MT) of a resin composition, and
A4 represents carbon emissions ($tCO_2$ eq/MT) of a control resin composition.

Specifically, A3 in Equation 2 corresponds to total carbon emissions ($tCO_2$ eq/MT) according to the composition ratio of each component contained in the resin composition to be measured. A4 corresponds to total carbon emissions ($tCO_2$ eq/MT) according to the composition ratio of each component of the resin composition using the same composition as the resin composition measured in A3, but containing pure materials (pure phthalate-based compound and/or pure cyclohexane dicarboxylate-based compound) instead of the recycled materials (recycled phthalate-based compound and/or recycled cyclohexane dicarboxylate-based compound). Herein, the unit of the carbon emissions is a weight equivalent (eq) of total $CO_2$ emissions per metric ton.

For example, the plasticizer composition of Example 1 contains R-DOTP and DEHCH at 50:50, and the sum of carbon emissions of each component according to the composition ratio is 0.568 $tCO_2$ eq/MT (A1, that is, carbon emissions of R-DOTP $\times$ 0.5 + carbon emissions of DEHCH $\times$ 0.5). The control group for this is the plasticizer composition of Comparative Example 3, and its carbon emissions (A2) is 0.611 $tCO_2$ eq/MT. Therefore, according to Equation 1, the carbon emission reduction rate of the plasticizer composition of Example 1 is 7.04%. The carbon emissions and the carbon emission reduction rate of the plasticizer composition of Example 4 can be obtained in the same manner as described above using the plasticizer composition of Comparative Example 3 as a control group.

In addition, the vinyl chloride resin composition of Example 1 includes 100 parts by weight of polyvinyl chloride (PVC), and 30 parts by weight of a plasticizer containing R-DOTP and DEHCH at 50:50, and the weight ratios of PVC, R-DOTP, DEHCH and the Bn/Zn-based heat stabilizer included in the vinyl chloride resin composition are 0.758, 0.114,

0.114, and 0.015, respectively. Considering only the carbon emissions of PVC, R-DOTP, and DEHCH excluding the carbon emissions of the heat stabilizer having an insignificant content in the composition, the sum of carbon emissions (A3) of each component according to this composition ratio is 0.267 $tCO_2$ eq/MT. Since the carbon emissions (A4) of the vinyl chloride resin composition of Comparative Example 3, a control group, is 0.277 $tCO_2$ eq/MT, the carbon emission reduction rate of the vinyl chloride resin composition of Example 1 is 3.53% when calculated according to Equation 2.

Herein, the carbon emissions of each component used in the plasticizer composition and the vinyl chloride resin composition was calculated as the following value:

- Polyvinyl chloride (PVC, Hanwha Solution P-1000): 0.182 $tCO_2$ eq/MT
- Recycled polyvinyl chloride (PVC scrap): 0 $tCO_2$ eq/MT
- Recycled dioctyl terephthalate (R-DOTP): 0.485 $tCO_2$ eq/MT
- Pure dioctyl terephthalate (DOTP, or Pure-DOTP): 0.571 $tCO_2$ eq/MT
- Recycled di(2-ethylhexyl)cyclohexane-1,4-dicarboxylate (R-DEHCH): 0.520 $tCO_2$ eq/MT
- Pure di(2-ethylhexyl)cyclohexane-1,4-dicarboxylate (DEHCH, or Pure-DEHCH): 0.651 $tCO_2$ eq/MT

Among them, the carbon emissions of polyvinyl chloride (PVC) and pure dioctyl terephthalate (DOTP, or Pure-DOTP) referred to the value provided by the manufacturer. In addition, the carbon emissions of recycled dioctyl terephthalate (R-DOTP) was calculated by assuming that the carbon emissions of recycled PTA (Pured terephthalic acid) used for R-DOTP is 70% of that of pure PTA, and the carbon emissions of PTA and the carbon emissions of 2-EH (2-ethylhexanol) are the same. PTA and 2-EH are raw materials for manufacturing DOTP.

(2) Color of plasticizer (APHA Color)

The color of the plasticizer was measured using APHA color measuring instrument according to ASTM D1209 and E313.

(3) Acid value of plasticizer

The acid value of the plasticizer was calculated by the following Equation using a 0.1N KOH aqueous solution and an indicator.

[Equation 3]

$$\text{Acid Value} = (\text{titration amount} \times 5.6 \times \text{factor})/\text{sample amount}$$

In Equation 2, 'titration amount' represents the amount (ml) of the 0.1 N KOH aqueous solution consumed for titration of the plasticizer, and 'factor' is a correction factor of the KOH aqueous solution (0.1 N KOH aqueous solution has the factor of 1), and 'sample amount' represents the weight (g) of the plasticizer sample.

(4) Gelling rate

54 g of the vinyl chloride resin composition was put into a 95 °C Brabender mixer and mixed at 30 rpm for 10 minutes. The gelling time of the resin was analyzed with the change in torque during the processing in the mixer.

(5) Hardness (Plasticization efficiency)

The vinyl chloride resin composition was sequentially subjected to roll mill processing (170 °C, 3 minutes) and press processing (180 °C, 8 minutes) to prepare a flat sheet having a thickness of 6 mm.

In accordance with the ASTM D2240 method, the needle of the hardness tester (Shore D Type) was completely lowered into one part of the specimen and the hardness value was read after 5 seconds. After testing three parts for each specimen, the average value thereof was taken and used as an indicator of the plasticization efficiency.

(6) Color of vinyl chloride resin composition

The vinyl chloride resin composition was sequentially subjected to roll mill processing (170 °C, 3 minutes) and press processing (180 °C, 8 minutes) to prepare a flat sheet having a thickness of 6 mm.

For the specimen prepared above, a yellow index (YI, yellowness) was measured according to ASTM E313.

Then, the specimen was put into an accelerated weathering tester (QUV, manufactured by Q-Lab), and exposed for 300 hours according to ASTM G154 (1 Cycle: UV irradiation for 8 hours at 0.8 $W/m^2/nm$ using a UVB 313 nm lamp at a temperature of 60 °C, condensation for 4 hours at a temperature of 50 °C), followed by measuring YI again.

When preparing a final resin product, the lower initial coloration (color, YI) of the vinyl chloride resin composition is evaluated as the better in terms of an excellent color.

[Table 1]

| | Example 1 | Example 2 | Example 3 | Example 4 | Example 5 | Example 6 |
|---|---|---|---|---|---|---|
| Plasticizer composition | R-DOTP: DEH CH =50:50 | R-DOTP: DEH CH =60:40 | R-DOTP: DEH CH =70:30 | R-DOTP:R-DEHCH =50: 50 | R-DOTP:R-DEHCH =50: 50 | R-DOTP:R-DEHCH =70: 30 |
| Carbon emissions (tCOz eq/MT) of plasticizer composition | 0.568 | 0.551 | 0.535 | 0.503 | 0.503 | 0.496 |
| Carbon emission reduction rate (%) of plasticizer composition | 7.04 | 8.56 | 10.12 | 17.76 | 17.76 | 20.97 |
| Plasticizer odor | Good | Good | Good | Good | Good | Good |
| Plasticizer color (YI) | 67 | 78 | 90 | 69 | 69 | 92 |
| Acid value of plasticizer (KOH mg/g) | 0.090 | 0.107 | 0.120 | 0.213 | 0.213 | 0.205 |
| Carbon emissions (tCOz eq/MT) of vinyl chloride resin composition | 0.267 | 0.263 | 0.259 | 0.252 | 0.114 | 0.25 |
| Carbon emission reduction rate (%) of vinyl chloride resin composition | 3.53 | 4.27 | 5.01 | 8.91 | 53.97 | 10.66 |
| Gelling rate (sec) | 212 | 225 | 240 | 196 | 190 | 202 |
| Hardness (Plasticization efficiency) | 94 | 94 | 95 | 94 | 93 | 95 |
| Initial color (YI) | 18.4 | 19.5 | 20.0 | 20.0 | 22.0 | 21.9 |
| Color after 300 hours of UV aging (YI) | 59.8 | 61.3 | 62.5 | 61.0 | 63.0 | 63.2 |

[Table 2]

| | Comparative Example 1 | Comparative Example 2 | Comparative Example 3 |
|---|---|---|---|
| Plasticizer composition | R-DOTP | R-DOTP:DEHCH =95:5 | DOTP:DEHCH =50: 50 |
| Carbon emissions ($tCO_2$ eq/MT) of plasticizer composition | 0.485 | 0.493 | 0.611 |

(continued)

| | Comparative Example 1 | Comparative Example 2 | Comparative Example 3 |
|---|---|---|---|
| Carbon emission reduction rate (%) of plasticizer composition | 15.06 | 14.21 | 0 |
| Plasticizer odor | Oil smell | Oil smell | None |
| Plasticizer color (YI) | 124 | 118 | 10 |
| Acid value of plasticizer (KOH mg/g) | 0.175 | 0.167 | 0.005 |
| Carbon emissions ($tCO_2$ eq/MT) of vinyl chloride resin composition | 0.248 | 0.250 | 0.277 |
| Carbon emission reduction rate (%) of vinyl chloride resin composition | 7.30 | 6.91 | 0 |
| Gelling rate (sec) | 286 | 270 | 226 |
| Hardness (Plasticization efficiency) | 95 | 94 | 95 |
| Initial color (YI) | 22.4 | 21.0 | 12.7 |
| Color after 300 hours of UV aging (YI) | 67.5 | 65.0 | 57.7 |

Referring to Table 1, it was confirmed that the plasticizer composition of the present disclosure could reduce carbon emissions by including recycled raw materials. Further, it had a good odor, and excellent color and acid value by using a pure cyclohexane dicarboxylate-based compound and/or a recycled cyclohexane dicarboxylate-based compound, thereby exhibiting gelling rate, hardness, and color characteristics equal to or higher than those of conventional plasticizers.

## Claims

1. A plasticizer composition, comprising

   a recycled phthalate-based compound as a first plasticizer; and
   a pure cyclohexane dicarboxylate-based compound and/or a recycled cyclohexane dicarboxylate-based compound as a second plasticizer,
   wherein the first plasticizer is included in an amount of 95 parts by weight or less based on 100 parts by weight of the plasticizer composition.

2. The plasticizer composition of Claim 1,
   wherein 100 parts by weight of the plasticizer composition comprises 20 to 85 parts by weight of the first plasticizer, and 5 to 70 parts by weight of the second plasticizer.

3. The plasticizer composition of Claim 1,
   wherein the first plasticizer is at least one selected from the group consisting of recycled dibutyl phthalate, recycled dihexyl phthalate, recycled dioctyl phthalate, recycled di-n-octyl phthalate, recycled diisononyl phthalate, recycled diisodecyl phthalate, recycled dibutyl isophthalate, recycled dioctyl isophthalate, recycled diisononyl isophthalate, recycled diisodecyl isophthalate, recycled dibutyl terephthalate, recycled dioctyl terephthalate, recycled diisononyl terephthalate, and recycled diisodecyl terephthalate.

4. The plasticizer composition of Claim 1,
   wherein the first plasticizer has an acid value of 0.05 KOH mg/g to 0.25 KOH mg/g.

5. The plasticizer composition of Claim 1,
   wherein the cyclohexane dicarboxylate-based compound is at least one selected from the group consisting of di(2-ethylhexyl)cyclohexane-1,4-dicarboxylate, diisononylcyclohexane-1,2-dicarboxylate, di(2-ethylhexyl)cyclohexane-1,2-dicarboxylate, butyl(2-ethylhexyl)cyclohexane-1,4-dicarboxylate, and dibutylcyclohexane-1,4-dicarboxylate.

**6.** The plasticizer composition of Claim 1,

wherein the first plasticizer is recycled dioctylterephthalate, and
the second plasticizer is pure di(2-ethylhexyl)cyclohexane-1,4-dicarboxylate and/or recycled di(2-ethylhexyl)cyclohexane-1,4-dicarboxylate.

**7.** The plasticizer composition of Claim 1,
further comprising at least one compound selected from the group consisting of phthalate-based compounds; polyol ester-based compounds; trimellitate-based compounds; aliphatic ester-based compounds; phosphate-based compounds; vegetable oils; epoxidized oils; and acylated monoglyceride compounds.

**8.** The plasticizer composition of Claim 1,
wherein a carbon emission reduction rate is 5% or more.

**9.** The plasticizer composition of Claim 1,

wherein an acid value is 0.25 KOH mg/g or less, and
a yellow index (YI, yellowness) measured according to ASTM E313 is 120 or less.

**10.** A resin composition comprising the plasticizer composition of any one of Claims 1 to 9; and at least one resin selected from the group consisting of polyvinyl chloride, polystyrene, polyurethane, polyethylene, polypropylene, silicone, modified silicone, ethylene vinyl acetate resin, polyketone, polyvinyl butyral, acrylic resin, synthetic rubber resin, and thermoplastic elastomer.

**11.** The resin composition of Claim 10,
wherein the plasticizer composition is included in an amount of 1 part by weight to 200 parts by weight based on 100 parts by weight of the resin.

**12.** The resin composition of Claim 10,
wherein a yellow index (YI, yellowness) measured according to ASTM E313 is 10 to 25.

**13.** The resin composition of Claim 10,
wherein a yellow index (YI, yellowness) measured after 300 hours of UV aging according to ASTM G154 is 10 to 65.

**14.** A molded product comprising the resin composition of Claim 10.

# INTERNATIONAL SEARCH REPORT

International application No.
**PCT/KR2021/019970**

**A. CLASSIFICATION OF SUBJECT MATTER**

**C08K 5/00**(2006.01)i; **C08K 5/101**(2006.01)i; **C08K 5/12**(2006.01)i; **C08L 101/00**(2006.01)i

According to International Patent Classification (IPC) or to both national classification and IPC

**B. FIELDS SEARCHED**

Minimum documentation searched (classification system followed by classification symbols)

C08K 5/00(2006.01); C07C 67/08(2006.01); C07C 69/82(2006.01); C08K 13/02(2006.01); C08K 5/11(2006.01); C08K 5/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재생 프탈레이트계 화합물(regenerated phthalate compound), 사이클로헥산 디카르복실레이트계 화합물(cyclohexane dicarboxylate compound), 가소제(plasticizer), 탄소 배출 저감(reducing carbon emission)

**C. DOCUMENTS CONSIDERED TO BE RELEVANT**

| Category* | Citation of document, with indication, where appropriate, of the relevant passages | Relevant to claim No. |
|---|---|---|
| A | KR 10-2017-0066548 A (BASF SE) 14 June 2017 (2017-06-14)<br>See paragraphs [0120] and [0179]; and claims 1, 10, 14 and 16. | 1-14 |
| A | US 2017-0145187 A1 (BASF SE) 25 May 2017 (2017-05-25)<br>See entire document. | 1-14 |
| A | US 2018-0134870 A1 (SCG CHEMICALS COMPANY LIMITED et al.) 17 May 2018 (2018-05-17)<br>See entire document. | 1-14 |
| A | KR 10-2020-0140084 A (HANWHA SOLUTIONS CORPORATION) 15 December 2020 (2020-12-15)<br>See entire document. | 1-14 |
| A | CN 104496819 A (INSTITUTE OF CHEMICAL INDUSTRY OF FOREST PRODUCTS, CAF) 08 April 2015 (2015-04-08)<br>See entire document. | 1-14 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 April 2022** | **14 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2021/019970**

| Patent document cited in search report | Publication date (day/month/year) | Patent family member(s) | Publication date (day/month/year) |
|---|---|---|---|
| KR 10-2017-0066548 A | 14 June 2017 | JP 2017-533305 A | 09 November 2017 |
| | | US 10287415 B2 | 14 May 2019 |
| | | US 2017-0313848 A1 | 02 November 2017 |
| US 2017-0145187 A1 | 25 May 2017 | US 2017-0145186 A1 | 25 May 2017 |
| US 2018-0134870 A1 | 17 May 2018 | JP 2018-525468 A | 06 September 2018 |
| | | JP 6659740 B2 | 04 March 2020 |
| | | KR 10-2018-0022680 A | 06 March 2018 |
| | | KR 10-2104480 B1 | 27 April 2020 |
| | | US 10538644 B2 | 21 January 2020 |
| KR 10-2020-0140084 A | 15 December 2020 | WO 2020-246743 A1 | 10 December 2020 |
| CN 104496819 A | 08 April 2015 | CN 104496819 B | 06 July 2016 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020200186411
- KR 1020210174063
- CN 104230714
- CN 104496819